# EUROPÄISCHE PATENTSCHRIFT

(11) **EP 0 613 936 B1**
(45) Veröffentlichungstag und Bekanntmachung des Hinweises auf die Patenterteilung: **01.04.1998**
(21) Anmeldenummer: 94200401.1
(22) Anmeldetag: 17.02.1994
(51) Int. Cl.: C10G 11/18, C01C 1/20, C25B 1/00

(54) **Verfahren zum Verringern der Korrosivität eines Sauerwassers**
Process for reducing of sour water corrosiveness
Procédé pour réduire la corrosivité d'une eau acide

(30) Priorität: 02.03.1993 DE 4306445
(43) Veröffentlichungstag der Anmeldung: 07.09.1994
(73) Patentinhaber: METALLGESELLSCHAFT AKTIENGESELLSCHAFT, 60323 Frankfurt am Main (DE)
(72) Erfinder: Brücken, Volker, D-65760 Eschborn (DE); Ungar, Gert, D-60598 Frankfurt am Main (DE); Stönner, Hans-Martin, D-65760 Eschborn (DE); Stöldt, Ernst, Dr., D-64646 Heppenheim (DE); Schlauer, Johann, Dr., D-60594 Frankfurt am Main (DE); Anastasijevic, Nikola, Dr., D-61137 Schöneck (DE); Hillrichs, Eilhard, Dr., D-63654 Büdingen (DE)

(56) Entgegenhaltungen:
- EP-A- 0 226 415
- US-A- 4 508 683

## Beschreibung

Die Erfindung betrifft ein Verfahren zum Verringern der Korrosivität eines in einer Anlage behandelten oder geführten Sauerwassers, das Cyanidionen (CN⁻), Ammoniumionen (NH₄ ⁺) und Sulfidionen (S⁻⁻) enthält, wobei man dem Sauerwasser in der Anlage eine Ammoniumpolysulfid (APS) enthaltende wäßrige Lösung zudosiert und mindestens einen Teil der Cyanidionen in Thiocyanationen (SCN⁻) umwandelt.

Ein solches Verfahren ist in US-A-4 508 683 und in "Hydrocarbon Processing" (July 1981), S. 149-155 beschrieben. Hierbei führt man den korrosionsgefährdeten Stellen der Anlage eine APS-Lösung aus einem Vorratstank zu, dabei wird aber nichts darüber ausgesagt, wie man die APS-Lösung herstellt. Aus EP-A-0 226 415 ist es bekannt, H₂S aus einem Gasstrom mit einer Ammoniumhydroxid-Lösung auszuwaschen, dabei Ammoniumsulfid zu erzeugen und daraus elektrochemisch APS zu bilden.

Der Erfindung liegt die Aufgabe zugrunde, das eingangs genannte Verfahren möglichst kostengünstig durchzuführen und dabei die APS-Lösung im Bereich der Anlage selbst zu erzeugen. Erfindungsgemäß geschieht dies dadurch, daß man die APS-Lösung in einer elektrochemischen Zelle oxidativ aus einer wäßrigen Lösung erzeugt, deren Gehalt an Ammoniumionen, gerechnet als NH₃, mindestens 1 g/l, und deren Gehalt an Sulfidionen, gerechnet als H₂S, 1 bis 200 g/l beträgt, wobei die der elektrochemischen Zelle zugeführte wäßrige Lösung zu 30 bis 100 % aus Sauerwasser besteht, das aus der Anlage kommt.

Die elektrochemische Zelle kann in an sich bekannter Weise z.B. als Membranzelle mit einer Kationenaustauschermembran zwischen Katholyt und Anolyt ausgebildet sein. An die Stelle der Kationenaustauschermembran kann auch eine mikroporöse Membran oder ein Diaphragma z.B. aus Polypropylen oder Polyvinylidendifluorid treten. Eine weitere Möglichkeit besteht darin, die elektrochemische Zelle ohne Membran oder Diaphragma auszubilden. Dabei sorgt man durch die Auswahl des Kathodenmaterials und die Zellengeometrie dafür, daß das an der Anode gebildete APS nicht an der Kathode reduziert wird.

In der elektrochemischen Zelle entsteht die APS-Lösung an der Anode durch Oxidieren von Ammoniumsulfid zu Ammoniumpolysulfid (NH₄)₂Sₓ, wobei x im Bereich von 2 bis 6 liegt. Als Katholyt kann die gleiche Lösung wie im Anodenraum verwendet werden, ferner kommen als Katholyten wäßrige, alkalische Lösungen z.B. von NaOH, NH₄OH, Na₂SO₄, Na₂CO₃ oder Gemische davon infrage, wobei sich ein pH-Wert von 9 bis 14 empfiehlt. Als Material für die Anode oder Kathode kann man z.B. Graphit, Nickel oder Edelstahl verwenden. Die Zellenspannung liegt etwa im Bereich von 1 bis 5 V und für die Stromdichte kommen üblicherweise Werte von 0,1 bis 3 kA/m² infrage.

Ausgestaltungsmöglichkeiten des Verfahrens werden mit Hilfe der Zeichnung erläutert. Es zeigt:
- Fig. 1: ein Fließschema des Verfahrens,
- Fig. 2: ein Verfahren zur Messunq der Korrosivität in schematischer Darstellung und
- Fig. 3: ein gegenüber Fig. 2 etwas vereinfachtes Meßverfahren.

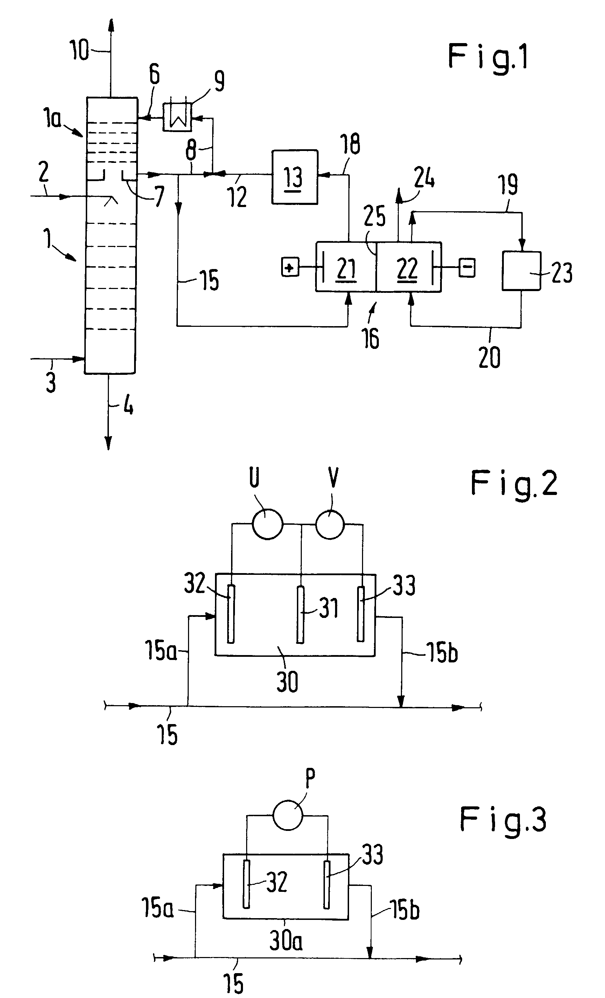

Gemäß Fig. 1 wird das Verfahren anhand einer Strippkolonne (1) erläutert, die einen gegen Korrosion zu schützenden oberen Bereich (la) aufweist. Das zu behandelnde Sauerwasser wird in der Leitung (2) herangeführt und mit Wasserdampf aus der Leitung (3) gestrippt. Der als Strippmedium dienende Wasserdampf kann auch durch Aufkochen im Sumpf der Kolonne (1) erzeugt sein. Die Kolonne enthält an sich bekannte, flüssigkeitsdurchlässige Böden oder Füllkörper. Weitgehend gereinigtes Wasser verläßt die Kolonne (1) durch die Leitung (4).

Im Kopfteil (la) der Kolonne erfolgt eine Kühlung durch gekühltes, im Kreislauf geführtes Kondensat, das in der Leitung (6) zugeführt wird. Das Kondensat wird vom flüssigkeitsdurchlässigen Boden (7) durch die Leitung (8) abgezogen, über eine nicht dargestellte Kreislaufpumpe durch den Kühler (9) geführt und durch die Leitung (6) zurück auf den Kopf der Kolonne gegeben. Wasserdampfhaltiges Abgas verläßt die Kolonne (1) durch die Leitung (10) und wird einer nicht dargestellten Aufarbeitung zugeführt. Der besseren Übersichtlichkeit wegen wurden Pumpen in der Zeichnung weggelassen.

Das Sauerwasser, das von der Leitung (6) auf den oberen Bereich (la) der Kolonne verteilt wird und vom Boden (7) teilweise gesammelt und über die Leitung (8) und den Kühler (9) im Kreislauf geführt wird, enthält Cyanidionen, Ammoniumionen und Sulfidionen in beträchtlicher Konzentration. Das Sauerwasser ist deshalb gegen Stahl, auch legierten Stahl, sehr korrosiv. Um diese Korrosivität ganz oder weitgehend zu beseitigen, mischt man das Sauerwasser mit einer wäßrigen APS-Lösung, die durch die Leitung (12) herangeführt wird und aus dem Vorratsbehälter (13) kommt. Erzeugt wird die APS-Lösung aus Sauerwasser, das man durch die Leitung (15) aus dem Strom der Leitung (8) abzweigt und es der Anodenkammer (21) einer schematisch angedeuteten elektrochemischen Zelle (16) zuführt. Durch elektrochemische Oxidation entsteht in der Anodenkammer Ammoniumpolysulfid (APS), welches man als wäßrige Lösung durch die Leitung (18) in den Vorratsbehälter (13) leitet.

In der Kathodenkammer (22) mit ihrem Katholyt-Kreislauf durch die Leitungen (19) und (20) mit dem Zwischenbehälter (23) wird Wasserstoff gebildet, den man in der Leitung (24) abzieht. Die Anodenkammer (21) kann von der Kathodenkammer (22) durch eine Kationenaustauschermembran (25) getrennt sein. An die Stelle der Membran (25) kann aber auch ein flüssigkeitsdurchlässiges Diaphragma treten und es ist ferner möglich, auch ohne Membran oder Diaphragma, d.h. ohne Strömungshindernis zu arbeiten.

Mit dem Vorratsbehälter (13) für die APS-Lösung können in einer größeren Anlage mehrere Stellen für das Zudosieren des Ammoniumpolysulfids verbunden sein, wie das an sich bekannt ist. Eine Möglichkeit der Regelung der Dosierung wird mit Hilfe der Fig. 2 erläutert. Hierbei wird die Korrosivität des sauren Wassers auf folgende Weise festgestellt: Aus der Leitung (15) - vgl. auch Fig. 1 - zweigt man durch die Leitung (15a) einen Teilstrom ab und leitet ihn durch eine Meßzelle (30). Das abfließende Wasser wird durch die Leitung (15b) zurück in die Hauptleitung (15) gegeben. In der Meßzelle (30) befinden sich eine Referenzelektrode (31), eine Werkstoffelektrode (32) und eine Platinelektrode (33). Die Referenzelektrode ist z.B. eine Kalomelelektrode, eine Quecksilber/Quecksilbersulfat-, Silber/Silberchlorid- oder eine Kupfer/Kupfersulfat-Elektrode, die an sich bekannt sind. Die Werkstoffelektrode wird durch das Material, z.B. Stahl, gebildet, dessen Korrosion in der Anlage zu unterdrücken ist. Das Potential zwischen der Referenzelektrode (31) und der Werkstoffelektrode (32) wird durch das Voltmeter (U) gemessen, ebenso wird das Potential (V) zwischen der Referenzelektrode (31) und der Platinelektrode (33) bestimmt. (U) mißt das Ruhepotential und durch (V) wird das Redoxpotential des Systems gemessen. Die Potentialdifferenz (V) - (U) ist ein Maß für die Korrosivität, wobei bei steigender Potentialdifferenz an der gefährdeten Stelle mehr APS-Lösung zudosiert werden muß, um störende Korrosion zu verhindern.

Eine gegenüber Fig. 2 etwas vereinfachte Meßzelle als Korrosionsindikator zeigt Fig. 3. Hier befinden sich in der Meßzelle (30a), die von einem Teilstrom des Sauerwassers der Leitung (15) durchflossen ist, nur die Werkstoffelektrode (32) und die Platinelektrode (33). Das zwischen den Elektroden gemessene Potential (P) ist ein Maß für die Korrosivität der Flüssigkeit gegen den Werkstoff.

### Beispiel

In einer der Zeichnung, Fig. 1, entsprechenden Anlage werden durch die Leitung (2) einer Strippkolonne (1) pro Stunde 30 517 kg Sauerwasser mit einer Temperatur von 110°C und einem Druck von 5 bar aufgegeben. Das Sauerwasser enthält NH₃, H₂S und HCN in der in der Tabelle in Spalte (A) angegebenen Menge:

| | A | B | C |
|---|---|---|---|
| NH₃ (kg/h) | 171 | 1,5 | 6113 |
| H₂S (kg/h) | 345 | 0,15 | 3858 |
| HCN (kg/h) | 1 | 0,03 | 0,8 |
| SCN⁻ (kg/h) | - | 1,7 | 44 |

Als Strippmedium dient Wasserdampf, der in einer Menge von 5 000 kg/h mit 140°C durch die Leitung (3) zugeführt wird. Im gereinigten Wasser der Leitung (4) finden sich die in Spalte (B) angegebenen Reste der Verunreinigungen. Durch die Leitung (6) werden pro Stunde 82 000 kg wäßriger Lösung mit einer Temperatur von 75°C in den Kühlbereich (1a) der Strippkolonne eingespeist, deren Begleitstoffe in Spalte (C) angegeben sind, nachdem man dieser wäßrigen Lösung durch die Leitung (12) 215 kg/h APS-Lösung zugegeben hat.

Die APS-Lösung wird in einer Membran-Elektrolysezelle vom Filterpressentyp hergestellt, die eine Plattenanode und eine Plattenkathode aus Graphit enthält. Anoden- und Kathodenkammer werden durch eine Kationenaustauschermembran (Nafion Typ 324 von DuPont) getrennt. Als Katholyt dient eine wäßrige, 15 %ige Na₂SO₄-Lösung, die 18 Gew.% NH₃ enthält, eine Temperatur von 50°C und einen pH-Wert von 13 aufweist. Der Katholyt wird im Kreis geführt, wie das in Fig. 1 dargestellt ist. Als Anolyt dient das obengenannte Sauerwasser, von dem durch die Leitung (15) eine Teilmenge von 210 kg/h der Zelle (16) zugeführt wird. Die Zelle weist eine Stromdichte von 1 kA/m² bei einer Zellenspannung von 2,8 V auf. Man erzeugt pro Stunde 5 kg aktiven Schwefel in Form von APS, das man durch die Leitungen (18) und (12) dem Sauerwasser der Leitung (8) zumischt.

Messung der Korrosivität: In einer Versuchsanordnung arbeitet man gemäß Fig. 2 und führt der Meßzelle (30) pro Stunde 10 l eines Sauerwassers mit einer Temperatur von 60°C zu, das dem zuvor beschriebenen Sauerwasser sehr ähnlich ist. Dieses Sauerwasser hat die in der Tabelle in Spalte A angegebenen wesentlichen Inhaltsstoffe:

| | A | B |
|---|---|---|
| CO₂ | 13 g/kg | 13 g/kg |
| NH₃ (gesamt) | 169 g/kg | 169 g/kg |
| H₂S | 51 g/kg | 51 g/kg |
| HCN (gesamt) | 93 mg/kg | 30 mg/kg |
| HCN (frei) | 23 mg/kg | 30 mg/kg |
| aktiver APS-Schwefel | - | 50 mg/kg |

Die Differenz zwischen HCN (gesamt) und HCN (frei) in Spalte A ergibt sich dadurch, daß sich durch Korrosion komplexe Eisencyanidverbindungen gebildet haben.

Die Werkstoffelektrode (32) besteht aus rostfreiem Stahl (deutsche Werkstoff-Nr. 1.4571, entspricht der US-Norm AISI 316 Ti) und die Referenzelektrode (31) ist eine übliche Ag/AgCl-Elektrode.

Ohne APS-Zugabe zum Sauerwasser erhält man folgende Meßwerte: U = -630 mV, V = -475 mV, V-U = 155 mV; der Materialverlust an der Werkstoffelektrode entspricht einer Dickenabnahme von 0,65 mm pro Jahr.

Nach Zugabe von APS zum Sauerwasser findet man darin die in der obigen Tabelle in Spalte B angegebenen Konzentrationen der wesentlichen Inhaltsstoffe. Es wird so viel APS-Lösung eingesetzt, daß man in der Meßzelle folgende Werte erhält: U = -490 mV, V = -475 mV, V-U = 15 mV. Die Dickenabnahme an der Werkstoffelektrode sinkt nun auf unter 0,01 mm pro Jahr.

## Patentansprüche

1. Verfahren zum Verringern der Korrosivität eines in einer Anlage behandelten oder geführten Sauerwassers, das Cyanidionen, Ammoniumionen und Sulfidionen enthält, wobei man dem Sauerwasser in der Anlage eine Ammoniumpolysulfid (APS) enthaltende wäßrige Lösung zudosiert und mindestens einen Teil der Cyanidionen in Thiocyanationen umwandelt, dadurch gekennzeichnet, daß man die APS-Lösung in einer elektrochemischen Zelle oxidativ aus einer wäßrigen Lösung erzeugt, deren Gehalt an Ammoniumionen, gerechnet als NH₃, mindestens 1 g/l, und deren Gehalt an Sulfidionen, gerechnet als H₂S, 1 bis 200 g/l beträgt, wobei die der elektrochemischen Zelle zugeführte wäßrige Lösung zu 30 bis 100 % aus Sauerwasser besteht, das aus der Anlage kommt.

2. Verfahren nach Anspruch 1, dadurch gekennzeichnet, daß man die Korrosivität des Sauerwassers durch mindestens eine Potentialmessung ermittelt und demgemäß die Dosierung mit APS-Lösung regelt.

3. Verfahren nach Anspruch 1 oder 2, dadurch gekennzeichnet, daß die elektrochemische Zelle als Membran- oder Diaphragmazelle ausgeführt ist.

4. Verfahren nach einem der Ansprüche 1 bis 3, dadurch gekennzeichnet, daß man in den Anodenraum der elektrochemischen Zelle aus der Anlage abgezogenes Sauerwasser und dem Kathodenraum eine alkalische Lösung zuführt.

5. Verfahren nach Anspruch 1 oder 2, dadurch gekennzeichnet, daß die elektrochemische Zelle ohne Hindernis zwischen Kathoden- und Anodenraum ausgebildet ist.

## Claims

1. A method for reducing the corrosiveness of an acidulated water which is treated or carried in a plant, which water contains cyanide ions, ammonium ions and sulphide ions, wherein an aqueous solution containing ammonium polysulphide (APS) is metered in to the acidulated water in the plant and at least a portion of the cyanide ions are converted into thiocyanate ions, characterised in that the APS solution is produced by oxidation in an electrochemical cell from an aqueous solution having a content of ammonium ions, calculated as NH₃, of at least 1 g/l and a content of sulphide ions, calculated as H₂S, of 1 to 200 g/l, the aqueous solution supplied to the electrochemical cell consisting of 30 to 100% acidulated water which comes from the plant.

2. A method according to Claim 1, characterised in that the corrosiveness of the acidulated water is determined by means of at least one potential measurement and the metering is regulated with APS solution accordingly.

3. A method according to Claim 1 or 2, characterised in that the electrochemical cell is a cell with a diaphragm or a membrane.

4. A method according to one of Claims 1 to 3, characterised in that acidulated water withdrawn from the plant is fed into the anode space of the electrochemical cell, and an alkaline solution into the cathode space.

5. A method according to Claim 1 or 2, characterised in that the electrochemical cell is formed without an obstruction between the cathode and anode spaces.

## Revendications

1. Procédé pour diminuer la corrosivité d'eaux acides traitées et guidées dans une installation, qui contiennent des ions cyanure, des ions ammonium et des ions sulfure, dans lequel on ajoute, de manière dosée, aux eaux acides dans l'installation, une solution aqueuse contenant du polysulfure d'ammonium (APS) et on transforme au moins une partie des ions cyanure en ions thiocyanate, caractérisé en ce qu'on obtient la solution de APS dans une cellule électrochimique par oxydation à partir d'une solution aqueuse, dont la teneur en ions ammonium, calculée comme NH₃, s'élève à au moins 1 g/l et dont la teneur en ions sulfure, calculée comme H₂S, s'élève de 1 à 200 g/l, dans lequel la solution aqueuse acheminée à la cellule électrochimique est constituée, à concurrence de 30 à 100%, des eaux acides qui proviennent de l'installation.

2. Procédé selon la revendication 1, caractérisé en ce qu'on détermine la corrosivité des eaux acides en se basant sur au moins une mesure du potentiel et en réglant en conséquence le dosage avec la solution de APS.

3. Procédé selon la revendication 1 ou 2, caractérisé en ce que la cellule électrochimique est réalisée sous forme d'une cellule à membrane ou à diaphragme.

4. Procédé selon l'une quelconque des revendications 1 à 3, caractérisé en ce qu'on achemine, dans le compartiment anodique de la cellule électrochimique, des eaux acides extraites de l'installation et, dans le compartiment cathodique, une solution alcaline.

5. Procédé selon l'une quelconque des revendications 1 ou 2, caractérisé en ce que la cellule électrochimique est réalisée sans obstacle entre le compartiment cathodique et le compartiment anodique.
